Europäisches Patentamt

European Patent Office

Office européen des brevets

(19)

(11) Veröffentlichungsnummer: **0 100 004**
A2

(12) # EUROPÄISCHE PATENTANMELDUNG

(21) Anmeldenummer: 83106584.2

(22) Anmeldetag: 06.07.83

(51) Int. Cl.³: **C 02 F 3/12**

(30) Priorität: 23.07.82 DE 3227488

(43) Veröffentlichungstag der Anmeldung: 08.02.84
Patentblatt 84/6

(84) Benannte Vertragsstaaten: **AT BE CH DE FR GB IT LI LU NL SE**

(71) Anmelder: **SCHERING AKTIENGESELLSCHAFT Berlin und Bergkamen, Waldstrasse 14 Postfach 15 40, D-4709 Bergkamen (DE)**

(72) Erfinder: **Küster-Sange, Karl, Dr. Dipl.-Chem., Görlitzer Strasse 39, D-4670 Lünen (DE)**
Erfinder: **Stein, Theodor, Feuerbachstrasse 42, D-4708 Kamen (DE)**

(54) **Verfahren zum biologischen Abbau organischer Schmutzfrachten in hochkonzentrierten Abwässern mit Hilfe frei suspendierter Bakterien.**

(57) Die Erfindung betrifft ein Verfahren zum biologischen Abbau organischer Schmutzfrachten in hochkonzentrierten Abwässern mit Hilfe frei suspendierter Bakterien, das dadurch gekennzeichnet ist, daß man den Abbau bei einem konstanten Redoxpotential (E) im Bereich von $-200$ bis $-350$ mV, einem konstanten pH-Wert zwischen 7,0 und 9,0 und bei einer annähernd konstanten hydraulischen Retentionszeit durchführt. Es wird ein Abbaugrad von über 90% erreicht.

EP 0 100 004 A2

SCHERING AG

<u>Verfahren zum biologischen Abbau organischer Schmutz-</u>
<u>frachten in hochkonzentrierten Abwässern mit Hilfe frei</u>
<u>suspendierter Bakterien</u>

Die Erfindung betrifft ein Verfahren zum biologischen
Abbau organischer Schmutzfrachten in hochkonzentrierten
Abwässern mit Hilfe frei suspendierter Bakterien bei
extrem hohen Raumbelastungen.

Es ist bekannt (Europäische Patentanmeldung 38 017), daß
in Abwässern mit Konzentrationen von ca. 1000 bis 5000
mg CSB/l ein Teilabbau bis zu 50 % der Inhaltsstoffe
erreicht werden kann, wenn man die Belüftung mit Hilfe
einer Redox-Messung so regelt, daß sich ein Redox-Potential < -200 mV entsprechend einem Wert $E_h$ < + 40 mV einstellt. Die Bakterien bleiben unter diesen Bedingungen
als Individuen dispers und bilden keine Aggregate (Belebtschlammflocken). Es wird daher auch keine Biomasse
zurückgeführt, sondern das Verfahren im Durchlauf betrieben.

Es ist Aufgabe der Erfindung, ein Verfahren anzugeben,
bei dem wesentlich höher konzentrierte Abwässer mit
CSB-Werten bis > 100000 mg CSB/l mit einem wesentlich
höheren Abbaugrad gereinigt werden können.

Die Aufgabe wird dadurch gelöst, daß man den Abbau bei
einem konstanten Redoxpotential E)* im Bereich von -200
bis -350 mV, einem konstanten pH-Wert zwischen 7,0 und
9,0 und bei einer annhähernd konstanten hydraulischen
Retentionszeit durchführt.

Vorzugsweise wird der Abbau bei einem Redox-Potential
von -250 mV durchgeführt.

\*) Gemessen mit einer Einstabmeßkette der Fa.
   Ingold, Pt - 4805 - 60.

Eine Absenkung des Redox-Potentials, insbesondere auf unter -350 mV, vermindert zwar die Gefahr einer Flockenbildung, zugleich aber verschlechtert sich der Wirkungsgrad des Abbaus. Eine Anhebung des Redox-Potentials steigert die Neigung zur Flockenbildung, insbesondere dann, wenn der Wert -200 mV überschritten wird.

Das Redoxpotential sollte auf einem möglichst konstanten Wert gehalten werden ($\pm$ 20 mV), da Schwankungen, insbesondere bei sehr hohen Raumbelastungen, zu Störungen führen.

Als besonders günstiger pH-Wert für die Durchführung des Verfahrens hat sich 8,0 bis 8,1 erwiesen, insbesondere , bei den üblicherweise in der chemisch-pharmazeutischen Industrie anfallenden Abwasserkonzentraten.

Bei besonderen Abwasserzusammensetzungen sind möglicherweise andere pH-Werte im Bereich 7 - 9 optimal; diese können durch einfache Versuche ermittelt werden. Eine hohe Konstanz des optimalen pH-Wertes wirkt sich günstig aus für einen störungsfreien Betrieb.

Weitgehend unabhängig von den pH-Werten im Zulaufwasser ($<$ 4,0 bis $>$ 10) stellt sich bei dem erfindungsgemäßen Verfahren ein für das System optimaler pH-Wert von 8,0 bis 8,1 ein. Nur bei Störungen ist der pH-Wert durch Dosierung von Neutralisationsmitteln mit Hilfe einer automatischen Regelung auf dem genannten Wert zu halten.

Bevorzugt wird der Abbau bei einer hydraulischen Retentionszeit von 1 - 5 Tagen betrieben. Eine Retentionszeit von 3 Tagen wurde für das genannte übliche Abwasserkonzentrat-Gemisch als besonders günstig befunden. Bei anderer Abwasserzusammensetzung sind andere Retentionszeiten im Bereich von 1 bis 5 Tagen möglich. Auch bei der Retentionszeit hat eine weitgehende Konstanz günstige Auswirkungen. Werden dem System Abwässer mit so hoher CSB-Konzentration zugeführt, daß bei der angestrebten Raumbelastung die angestrebte hydraulische Retentionszeit überschritten wird, besteht die Möglichkeit, dieses Hochkonzentrat durch Zusatz schwächer konzentrierter Abwässer zu verdünnen. Dabei kann es jedoch zu Ausfällungserscheinungen kommen, die den ordentlichen Betrieb stören. In diesem Falle kann das Abwasser geringerer Konzentration getrennt zugefügt werden. Die Volumenströme sind so abzustimmen, daß die angestrebten Werte für Raumbelastung und hydraulische Retentionszeit eingehalten werden.

Bevorzugt wird ein Temperaturbereich von 35 bis 42 °C. Die jeweilige Temperatur ist mit weitestgehender Konstanz einzuhalten. Bei einem üblichen Abwasser-Konzentrat-Gemisch ist die günstigste Temperatur 38 °C. Schon eine Anhebung der Temperatur um 2 °C wirkt sich als Störung aus.

Diese hohen Temperaturen stellen sich bei hohen Raumtemperaturen durch die Freisetzung von ca. 3 kcal/g abgebautem CSB ein und machen u. U. sogar die Installation einer Kühleinrichtung erforderlich.

Bei niedrigeren Raumbelastungen liegt die Temperatur entsprechend niedriger (ca. 20 - 35 °C), zugleich sinkt aber auch der Wirkungsgrad des Abbaus.

Eine annähernde Konstanz der Abwasser-Zusammensetzung ist wünschenswert, da jede größere Veränderung zunächst Störungen verursacht, bis sich die Biozönose adaptiert hat.

Die Konstanz der Verfahrensparameter (Redox-Potential, pH, Temperatur, bei hoher Raumbelastung auch diese, hydraulische Retentionszeit) ist zur Erzielung hoher Abbauleistungen erforderlich. Jede stärkere Abweichung kann zur Bildung von Bakterienflocken und zu verminderter Raumabbauleistung führen. Bei Fehlen einer automatischen pH-Regelung kann der pH-Wert bis auf Werte von pH 5 absinken und in diesem Falle zum völligen Zusammenbruch des Systems führen.

Werden durch größere Schwankungen Störungen des Prozesses verursacht, ist als bevorzugte Hilfsmaßnahme die Verminderung der Raumbelastung und nach Erholung des Systems eine nachfolgende langsame Steigerung der Raumbelastung zu empfehlen.

Eine entsprechende automatische Regelung der Parameter ist daher zu empfehlen. So kann der pH-Wert durch automatische Zudosierung von Säure oder Base in Abhängigkeit vom gemessenen pH-Wert geregelt werden.

Bei Abwässern, die ausschließlich mehr oder minder einfach aufgebaute organische Substanzen (Lösungsmittel u.dgl.) enthalten, müssen Zusatzstoffe wie N, P, Fe, Ca, Na, K und Spurenelemente (Al, Mo, B, Co, Zn, Ni, V, W) zugefügt werden.

Eine bevorzugte Ausführungsform des Verfahrens ist dadurch gekennzeichnet, daß man durch Regelung der Belüftung in Abhängigkeit vom gemessenen Redoxpotential die angestrebten Werte des Redoxpotentials eingestellt.

Das Abwasser kann in bekannter Weise mit Hilfe einer automatischen Regelung auf dem Sollwert der Temperatur gehalten werden.

In der Einarbeitungszeit kann die Raumbelastung in kg CSB/m³ Reaktorvolumen und Tag relativ rasch (ca. 25%/d) gesteigert werden; je höher die Raumbelastung jedoch steigt, umso vorsichtiger muß die weitere Steigerung gehandhabt werden, wenn eine Störung des Prozesses ver mieden werden soll. Raumbelastungen bis zu 30 kg CSB/m³.d sind erreichbar.

Bei einigen Abwässern kann es zu einer extremen Schaumbildung kommen; dabei ist der Schaum hochdilatant, weist die Konsistenz von Eierschnee auf und muß mit sehr starken mechanischen Schaumzerstörern bekämpft werden. Die Schaumbildung ist im allgemeinen um so stärker, je höher die Raumabbauleistung gesteigert wird.

Es wurde überraschend festgestellt, daß nach dem erfindungsgemäßen Verfahren mit steigender Raumbelastung in der ersten Stufe die Abbauraten bis zu 90 % gesteigert werden können. Bei den Verfahrensbedingungen stellt sich eine Bakterienkonzentration von bis zu 10 g TS/l ein, die dispers bleibt und nur bei Störungen Flockungserscheinungen zeigt.

Die Produktion von Bakterienmasse ist äußerst gering; sie liegt nur bei ca. 150 g TS/kg abgebautem CSB.

Besonders gute Abbauergebnisse erhält man, wenn dem Verfahren eine zweite Verfahrensstufe nachgeschaltet ist, bei der ein konstanter Redoxpotentialwert zwischen -200 mV bis -100 mV eingehalten wird. Bevorzugt ist in der zweiten Stufe eine hydraulische Retentionszeit von 20 bis 50 Stunden.

In der zweiten Verfahrensstufe, bei vermehrter Sauerstoffzufuhr, werden von der Restkonzentration noch bis zu 50 % abgebaut, ohne daß es zu einer nennenswerten Steigerung der Konzentration an Biomasse kommt, so daß Abbauraten im Gesamtsystem bis zu 95 % erreicht werden.

In der 2. Stufe bilden die Bakterien zu einem großen Teil erwartungsgemäß Flocken; Protozoen, vorzugsweise Flagellaten, treten in großer Zahl auf. Wird das Redoxpotential wesentlich über den Wert -100 mV angehoben, treten vorzugsweise Ciliaten auf, die die Bakterienkonzentration soweit vermindern, daß die Abbaurate in dieser Stufe auf Werte von $\leq 30$ % absinkt.

Es wurde weiterhin festgestellt, daß bei sinkender Abbaurate in der 1. Stufe und damit einer höheren Belastung der 2. Stufe die Abbaurate in dieser 2. Stufe ansteigt und umgekehrt, eine Erscheinung, die zu einer hohen Konstanz der Abbaurate des Gesamtsystems führt.

Bei Mangel an Minimumstoffen, insbesondere Stickstoff und/oder Phosphor, sind der 1. Stufe diese Stoffe zuzufügen, und zwar ca. 15 g N/kg abzubauendem CSB und/oder 5 g P/kg abzubauendem CSB. Dabei ist es vorteilhaft wegen der vereinfachten Dosierung, den Stickstoff in Form von Salpetersäure, den Phosphor in Form von Phosphorsäure einzugeben.

Beispiel

Einem Versuchsreaktor mit 260 l Volumen, betrieben mit über dem Sollwert Redox-Potential von -250 ± 20 mV automatisch geregelter Belüftung, einer über ein Kontaktthermometer automatisch geregelten Temperatur von 38 °C, einem über eine automatisch geregelte Zufuhr von Natronlauge konstant gehaltenen pH-Wert von 8,0 - 8,1 wurden 2 Abwassermischungen kontinuierlich zugeführt:

a) Ein Abwasser aus einem Destillationsbetrieb mit einem Gehalt von ca. 20 % Essigsäure, 10 % Methanol und ca. 2 % Äthanol und Aceton mit einer Konzentration an CSB von ca. 300 000 mg/l in einer Menge von 17 - 21 l/d, der pH-Wert lag bei 3 - 4.

b) Verschiedene Abwässer aus dem Aufarbeitungsbetrieb einer mikrobiologischen Produktion mit einem CSB-Wert von 5000 bis 15000 mg/l, stabilisiert mit Salpetersäure, auf einen pH-Wert ≈ 4,0 in einer Menge von 50 - 70 l/d.

Die hydraulische Retentionszeit betrug 3,2 ± 0,4 Tage. Bei einer Raumbelastung von 23,5 g CSB/ed (arithmetisches Mittel aus 3 Wochen) betrug die Raumabbauleistung 21,3 g CSB/ld, somit wurde ein Abbaugrad von 90,6 % erreicht.

Dieses Abwasser floß einer 2. Stufe an, betrieben bei 20 °C, mit einem über Handbetrieb eingestellten Redox-Potential von 140 ± 40 mV, einer hydraulischen Retentionszeit von 23 ± 3 h. Hier wurden bei einer Raumbelastung von ca.9 g CSB/ld noch 4,6 g CSB/l biologisch, was einem Wirkungsgrad von 51 % entspricht. Damit ergibt sich für das Gesamtsystem ein Wirkungsgrad von 96 %. Die im Untersuchungszeitraum angefallene Biomasse betrug 105 g Trockensubstanz pro kg abgebautem CSB.

0100004

Patentansprüche

1. Verfahren zum biologischen Abbau organischer Schmutzfrachten in hochkonzentrierten Abwässern mit Hilfe frei suspendierter Bakterien, dadurch gekennzeichnet, daß man den Abbau bei einem konstanten Redoxpotential (E) im Bereich von -200 bis -350 mV, einem konstanten pH-Wert zwischen 7,0 und 9,0 und bei einer annähernd konstanten hydraulischen Retentionszeit durchführt.

2. Verfahren nach Anspruch 1, dadurch gekennzeichnet, daß man den Abbau bei einem Redoxpotential von -250 mV durchführt.

3. Verfahren nach Anspruch 1 und 2, dadurch gekennzeichnet, daß man den Abbau bei einem pH-Wert von 8,0 bis 8,1 durchführt.

4. Verfahren nach Anspruch 1 - 3, dadurch gekennzeichnet, daß man den Abbau bei einer hydraulischen Retentionszeit von 1 - 5 Tagen, insbesondere 3 Tagen, betreibt.

5. Verfahren nach Anspruch 1 - 4, dadurch gekennzeichnet, daß man den Abbau bei einer Temperatur von 35 - 42 °C, insbesondere 38 °C, durchgeführt.

6. Verfahren nach Anspruch 1 - 5, dadurch gekennzeichnet, daß man durch Regelung der Belüftung in Abhängigkeit vom gemessenen Redoxpotential die angestrebten Werte des Redoxpotentials einstellt.

7. Verfahren nach Anspruch 1 - 6, dadurch gekennzeichnet, daß den Verfahren eine zweite Verfahrensstufe nachgeschaltet ist, bei der ein konstanter Redoxpotentialwert zwischen -200 mV bis -100 mV eingehalten wird.

8. Verfahren nach Anspruch 7, dadurch gekennzeichnet, daß die hydraulische Retentionszeit der zweiten Stufe 20 - 50 h beträgt.